# FASCICULE DE BREVET EUROPEEN

(11) **EP 3 162 026 B1**
(45) Date de publication et mention de la délivrance du brevet: **23.12.2020**
(21) Numéro de dépôt: 15756952.6
(22) Date de dépôt: 24.06.2015
(51) Int. Cl.: H04L 29/06, H04L 29/08, H04W 4/20, H04L 29/12, H04W 12/08

(54) **PROCÉDÉ D'AUTORISATION D'ÉTABLISSEMENT D'UN FLUX PAIR À PAIR DANS UN RÉSEAU DE TÉLÉCOMMUNICATIONS MOBILES**
VERFAHREN ZUR AUTORISIERUNG DER EINRICHTUNG EINES PEER-TO-PEER-STREAMS IN EINEM MOBILTELEKOMMUNIKATIONSNETZWERK
METHOD FOR AUTHORISING THE ESTABLISHMENT OF A PEER-TO-PEER STREAM IN A MOBILE TELECOMMUNICATIONS NETWORK

(30) Priorité: 30.06.2014 FR 1456192
(43) Date de publication de la demande: 03.05.2017
(73) Titulaire: ORANGE, 75015 Paris (FR)
(72) Inventeur: MARJOU, Xavier, F-22300 Lannion (FR); FROMENTOUX, Gaël, F-22560 Pleumeur Bodou (FR)
(74) Mandataire: Plasseraud IP
(86) Numéro de dépôt international: PCT/FR2015/051697
(87) Numéro de publication internationale: WO 2016/001529

(56) Documents cités:
- EP-A1- 1 973 266
- US-B1- 8 601 144
- REDDY CISCO J KAIPPALLIMALIL HUAWEI RAM MOHAN RAVINDRANATH CISCO R EJZAK ALCATEL-LUCENT T: "Considerations with WebRTC in Mobile Networks; draft-reddy-rtcweb-mobile-03.txt", CONSIDERATIONS WITH WEBRTC IN MOBILE NETWORKS; DRAFT-REDDY-RTCWEB-MOBILE-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 9 mai 2013 (2013-05-09), pages 1-16, XP015091096,
- "Oracle Communications WebRTC Session Controller Concepts Release 7.0", Oracle, 1 novembre 2013 (2013-11-01), XP055180129, Extrait de l'Internet: URL:http://docs.oracle.com/cd/E40972_01/do c.70/e40976.pdf [extrait le 2015-03-30]
- LIN LI ET AL: "Research on the integration of RTCWeb technology with IP multimedia subsystem", IMAGE AND SIGNAL PROCESSING (CISP), 2012 5TH INTERNATIONAL CONGRESS ON, IEEE, 16 octobre 2012 (2012-10-16), pages 1158-1161, XP032336306, DOI: 10.1109/CISP.2012.6469705 ISBN: 978-1-4673-0965-3
- PENNO T REDDY D WING B VERSTEEG CISCO M BOUCADAIR FRANCE TELECOM R: "PCP Usage for Quality of Service (QoS) in Mobile Networks; draft-penno-pcp-mobile-qos-00.txt", PCP USAGE FOR QUALITY OF SERVICE (QOS) IN MOBILE NETWORKS; DRAFT-PENNO-PCP-MOBILE-QOS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 29 juillet 2013 (2013-07-29), pages 1-13, XP015093810,

## Description

La présente invention concerne le traitement de données dans un réseau de télécommunications, et plus particulièrement dans un réseau de télécommunications mobile.

Elle concerne plus particulièrement la gestion de l'établissement de flux pair à pair dans le réseau de télécommunications mobile, sur requête d'un fournisseur de service mettant en œuvre des services pair à pair.

On entend par fournisseur de service toute entité apte à fournir tout type de service impliquant des échanges de flux de données sur le réseau de télécommunications mobile. Le flux de données peut être transporté sur le réseau entre un terminal utilisateur et un serveur dédié au fournisseur de service, ou peut être transporté entre deux terminaux utilisateurs, lorsque les flux de données sont de type WebRTC par exemple (pour « *Web Real Time Communication* » en anglais). Dans ce dernier cas, le fournisseur de service permet la mise en liaison des deux utilisateurs qui échangent ensuite directement des flux de données WebRTC. Bien que l'invention soit décrite plus particulièrement dans le cadre de flux WebRTC, elle s'applique à tout type de flux de données pair à pair.

Le protocole WebRTC est un protocole qui permet l'établissement de communications directement de pair à pair (« peer to peer » an anglais, ou P2P) entre deux navigateurs Internet installés sur deux terminaux utilisateur. Par exemple, il permet des communications en visio avec échange média en P2P, le partage de fichiers en P2P ou encore la VoIP (pour « Voice over Internet Protocol » en anglais).

Le protocole WebRTC propose trois interfaces de programmation (API) :
- l'API MediaStream (MS) permettant de récupérer des flux de données d'un utilisateur (vidéo via une webcam, audio via le microphone, etc) ;
- l'API PeerConnection (PC) permettant d'établir des communications P2P entre deux navigateurs d'utilisateurs et d'échanger des flux de données conversationnels (audio et vidéo pouvant être transportés avec la suite protocolaire SRTP/UDP) ;
- l'API DataChannel (DC) permettant l'échange de flux de données brutes (textes ou données binaires pouvant être transportés avec la suite protocolaire SCTP/DTLS/UDP).

L'utilisation des APIs WebRTC PC et DC génère des flux de données P2P qui utilisent généralement le protocole de transport UDP (pour « *User Datagram Protocol* » en anglais), mais parfois aussi le protocole de transport TCP (pour « *Transmission Control Protocol* » en anglais). On entend ici par flux de données un ensemble de paquets de données transmis de manière unidirectionnelle entre deux entités (deux terminaux utilisateurs en P2P ou entre un terminal utilisateur et un serveur). Un flux de données se caractérise par une adresse IP source (celle de l'émetteur du flux), un numéro de port source, une adresse IP de destination (celle du destinataire), un numéro de port de destination, et un protocole de transport.

Quand les flux de données ne peuvent pas être échangés en P2P, par exemple à cause de NAT (pour « *Network Address Translation* » en anglais) ou d'éléments de type Firewall, une technologie appelée ICE (pour « *Internet Communication Engine* » en anglais) et utilisée par WebRTC permet de réaliser des échanges de données entre navigateurs internet par le biais de serveurs intermédiaires média ou relais média (appelés serveurs TURN, pour « *Traversal Using Relays around NAT* »). La communication entre les navigateurs internet est ainsi permise mais le délai d'acheminement des données est rallongé.

Dans le cadre de réseaux d'accès mobiles, exploitant la technologie 3G ou 4G, les opérateurs de réseau interdisent généralement les échanges P2P entre terminaux mobiles, notamment pour les raisons suivantes :
- afin de forcer les flux de données à transiter par un organe réseau de mise en œuvre d'une politique réseau (organe de type PCEF par exemple, pour *« Policy and Charging Enforcement Function* ») et un organe de comptage (par exemple une fonction OCS, pour « *Online Charging System* » en anglais) ;
- afin de forcer les flux de données à transiter par un équipement d'inspection des flux (DPI, pour « *Deep Packet Inspection* » en anglais) pour identifier la nature des flux ;
- afin de forcer les flux de données à transiter par un équipement DPI pour interdire des protocoles qui permettraient à un utilisateur (d'un PC mobile avec carte 3G par exemple) d'administrer le PC mobile (avec carte 3G) d'un autre utilisateur.

Ainsi, une grande partie des opérateurs de réseau mobile interdisent systématiquement tous les flux P2P sur les réseaux d'accès mobiles 3G ou 4G bien que le P2P puisse supporter des services « licites ».

Les fournisseurs de services utilisant la technologie WebRTC sont donc contraints à mettre en œuvre des serveurs média de type TURN pour que les communications WebRTC de mobile à mobile (3G ou 4G) puissent fonctionner.

L'interdiction des flux de données P2P sur les réseaux mobiles pose ainsi un triple inconvénient :
- du point de vue de l'utilisateur, la qualité d'expérience (QoE, pour « Quality of Experience » en anglais) est moins bonne car le chemin des flux de données, transportant la VoIP (pour « *Voice over Internet Protocol* » en anglais) par exemple, est allongé et le délai IP des données audio augmente ;
- du point du vue du fournisseur de service, le coût augmente car il doit mettre en place et exploiter des serveurs de média (coût OPEX, pour *« OPerational EXpenditure* » en anglais, ou coût CAPEX, pour *« CAPital EXpenditure* » en anglais) ;
- du point de vue de l'opérateur de réseau mobile, les KPI de latence placent l'opérateur dans une situation défavorable lors de mesures menées par les consommateurs, les régulateurs (de type ARCEP par exemple, « Autorité de Régulation des Communications Electroniques et des Postes »), ou par des fournisseurs de services tels que Google™.

Il existe ainsi un besoin :
- pour les fournisseurs de services, de mettre en œuvre des services à contraintes de qualité de service (QoS pour « *Quality of Service* » en anglais) qui utilisent le mode P2P ;
- pour les utilisateurs et les fournisseurs de service, d'obtenir le meilleur rapport QoE/coût possible ;
- pour les opérateurs de réseaux mobiles, de permettre l'échange de flux de données P2P sur le réseau mobile tout en conservant un contrôle sur les flux échangés.
Le document REDDY CISCO KAIPPALLIMALIL HUAWEI RAM MOHAN RAVINDRANATH CISCO R EJZAK ALCATEL-LCUENT T : « Considerations with WebRTC in Mobile Networks ; draft-reddy-rtcweb-mobile-03.txt», CONSIDERATIONS WITH WEBRTC IN MOBILE NETWORKS; 9 mai 2013, pages 1 à 16, se concentre sur les aspects de transfert de traffic et de QoS, et ne concerne pas d'autres problématiques telles que la consommation d'énergie, le basculement d'interface et la gestion des congestions.
Le document « Oracle Communications WebRTC Session Controller Concepts Release 7.0 », Oracle, 1 novembre 2013, décrit une présentation d'un contrôleur de session WebRTC Oracle et présente en particulier ses caractéristiques, son architecture et les configurations supportées.

La présente invention vient améliorer cette situation.
Elle propose à cet effet un procédé conforme à la revendication 1.

Ainsi, l'opérateur de réseau peut permettre le transport de flux média pour un service pair à pair pour des utilisateurs du réseau mobile, tout en conservant le contrôle de l'autorisation ou du refus de tels flux pair à pair. La latence des flux de données entre utilisateurs du réseau mobile est donc considérablement réduite pour les flux autorisés, qui n'ont plus à transiter vers un serveur relais média. On entend par plateforme de réseau toute plateforme apte à communiquer, via un réseau externe de type IP par exemple, avec des serveurs de fournisseurs de service. Une telle plateforme peut être une plateforme PCRF par exemple (pour « *Policy and Charging Rules Function* » en anglais). La passerelle réseau peut être une passerelle de type GGSN (pout *« Gateway GPRS Support Node »* en anglais) ou P-Gateway par exemple. Aucune restriction n'est attachée aux critères ou règles utilisés par la plateforme pour autoriser ou refuser un flux pair à pair.

Selon un autre avantage procuré, les flux refusés peuvent tout de même transiter par un serveur relais média. Il est ainsi rendu possible de faire confiance à certains types de flux pair à pair, et d'avoir un contrôle accru sur d'autres flux pair à pair. La diminution de la latence des flux pair à pair ne se fait ainsi pas au détriment de la sécurité associée au transport de ces flux dans le réseau mobile.

Selon un mode de réalisation de l'invention, l'étape de décision d'autoriser ou non l'établissement du flux peut comprendre les étapes suivantes :
- identifier le fournisseur de service pair à pair ayant émis la requête ;
- décider d'autoriser ou non l'établissement du flux pair à pair entre le premier terminal et le second terminal utilisateur en fonction du fournisseur de service identifié.

La plateforme peut à cet effet comprendre une base de données stockant les identifiants des fournisseurs de service pour lesquels des flux pair à pair peuvent être autorisés, par exemple des fournisseurs de service avec lesquels des accords ont été conclus au préalable.

En complément, le fournisseur de service peut être identifié au moyen d'au moins un élément, contenu dans la requête d'établissement de flux pair à pair, parmi une adresse IP source de la requête d'établissement, un attribut désignant le fournisseur de service ou un champ de la requête d'établissement identifiant le fournisseur de service.

Ainsi, aucune donnée supplémentaire n'est à renseigner par le serveur du fournisseur de service lors de l'envoi de la requête d'autorisation du flux pair à pair.

Ce mode de réalisation permet de renforcer la sécurité associée aux échanges entre le serveur du fournisseur de service et la plateforme de l'opérateur réseau. Le champ de la requête d'établissement identifiant le fournisseur de service peut par exemple être renseigné de manière à comprendre un couple nom d'utilisateur/mot de passe.

Selon un mode de réalisation de l'invention, la requête d'établissement de flux peut identifier en outre un type de média pour la communication pair à pair, et la décision d'autoriser ou non l'établissement du flux pair à pair peut dépendre du type de média identifié.

Il est ainsi possible d'avoir une politique d'autorisation de flux pair à pair différenciée en fonction des types de média échangés, qui peuvent notamment varier en termes de bande passante requise.

Un mode de réalisation peut prévoir que la requête d'établissement de flux identifie en outre une valeur de bande passante minimale requise pour l'établissement du flux pair à pair et que la décision d'autoriser ou non l'établissement du flux pair à pair dépend de la valeur de bande passante minimale requise.

Un tel mode de réalisation permet de favoriser des flux pair à pair moins consommateurs en ressources du réseau mobile.

En complément, la décision d'autoriser ou non l'établissement du flux pair à pair peut dépendre en outre d'une valeur de bande passante disponible sur le réseau de télécommunications mobile.

Il peut ainsi être évité de surcharger le réseau, en contrôlant dynamiquement l'autorisation et le refus de flux pair à pair en fonction de la valeur de bande passante disponible.

Selon un mode de réalisation de l'invention, l'identifiant de flux peut comprendre une première adresse IP et un premier numéro de port du premier terminal utilisateur, une seconde adresse IP et un second numéro de port du second terminal utilisateur, et un identifiant de protocole de communication pair à pair.

Dans un mode de réalisation, le message d'autorisation ou de refus du flux peut comprendre en outre l'un ou les paramètres suivants :
- une valeur de qualité de service à mettre en œuvre pour le flux identifié ;
- une valeur de bande passante minimale à garantir pour le flux identifié.

Ainsi, la plateforme, lorsqu'elle autorise un flux pair à pair, définit en outre les paramètres de transport du flux dans le réseau mobile.

En complément, le procédé peut comprendre en outre l'étape suivante mise en œuvre dans la passerelle réseau en charge de contrôler les flux transitant sur le réseau de télécommunications mobile :
- sur réception d'un message d'autorisation de flux pair à pair après avoir forcé le flux de données à transiter par le serveur relais média, autoriser le flux de données à transiter en pair à pair entre le premier terminal utilisateur et le second terminal utilisateur via le réseau de télécommunications mobile.

Dans un mode de réalisation de l'invention, le procédé peut comprendre en outre l'étape suivante mise en œuvre dans la plateforme
- recevoir, depuis le fournisseur de service pair à pair, des rapports de consommation relatifs à des flux pairs à pairs autorisés sur le réseau de télécommunications mobile.

Ainsi, l'opérateur de réseau a accès à des données exploitables qu'il ne peut plus acquérir par des mesures directes sur le réseau mobile.

Un deuxième aspect de l'invention concerne un produit programme informatique comportant des instructions pour la mise en œuvre du procédé selon le premier aspect de l'invention, lorsque ce programme est exécuté par un processeur.

Un troisième aspect de l'invention concerne un système d'autorisation d'établissement d'un flux pair à pair entre deux terminaux utilisateur d'un réseau de télécommunications mobile, le système comprenant une plateforme de réseau de télécommunications mobiles comprenant :
- une unité de réception apte à recevoir, depuis un serveur d'un fournisseur de service pair à pair, une requête d'établissement d'un flux pair à pair entre un premier terminal utilisateur et un second terminal utilisateur, la requête d'établissement comprenant un identifiant de flux, l'identifiant de flux comprenant au moins un identifiant du premier terminal utilisateur et un identifiant du second terminal utilisateur ;
- une unité de décision apte à décider d'autoriser ou non l'établissement du flux pair à pair entre le premier terminal et le second terminal utilisateur ;
- une unité de transmission apte à transmettre un message d'autorisation ou de refus du flux à une passerelle réseau en charge de contrôler les flux transitant sur le réseau de télécommunications mobile, le message d'autorisation ou de refus comprenant l'identifiant de flux,
   et une passerelle réseau en charge de contrôler les flux transitant sur le réseau de télécommunications mobiles, la passerelle réseau comprenant :
   - une unité de réception apte à recevoir un message d'autorisation ou de refus du flux, le message d'autorisation ou de refus comprenant l'identifiant de flux ;
   - une unité de traitement apte à, lorsqu'un paquet d'un flux entre le premier terminal utilisateur et le deuxième terminal utilisateur est reçu par l'unité de réception :
   - autoriser le flux de données à transiter en pair à pair entre le premier terminal utilisateur et le second terminal utilisateur via le réseau de télécommunications mobile, si un message d'autorisation comprenant l'identifiant du flux a été reçu par l'unité de réception ;
   - forcer le flux de données entre le premier terminal utilisateur et le second terminal utilisateur à transiter par un serveur relais média, si un message de refus comprenant l'identifiant du flux a été reçu par l'unité de réception ou en l'absence de réception par l'unité de réception d'un message d'autorisation de flux comprenant l'identifiant du flux.

D'autres caractéristiques et avantages de l'invention apparaîtront à l'examen de la description détaillée ci-après, et des dessins annexés sur lesquels:
- la figure 1 illustre un système d'autorisation d'un flux pair à pair entre des premier et second terminaux utilisateurs selon un mode de réalisation de l'invention ;
- la figure 2 est un diagramme illustrant les étapes d'un procédé selon un mode de réalisation de l'invention ; et
- la figure 3 illustre un diagramme d'échanges dans le système représenté sur la figure 1, selon un mode de réalisation de l'invention ;
- la figure 4 illustre une plateforme d'un réseau de télécommunications selon un mode de réalisation de l'invention ; et
- la figure 5 présente une passerelle réseau selon un mode de réalisation de l'invention.

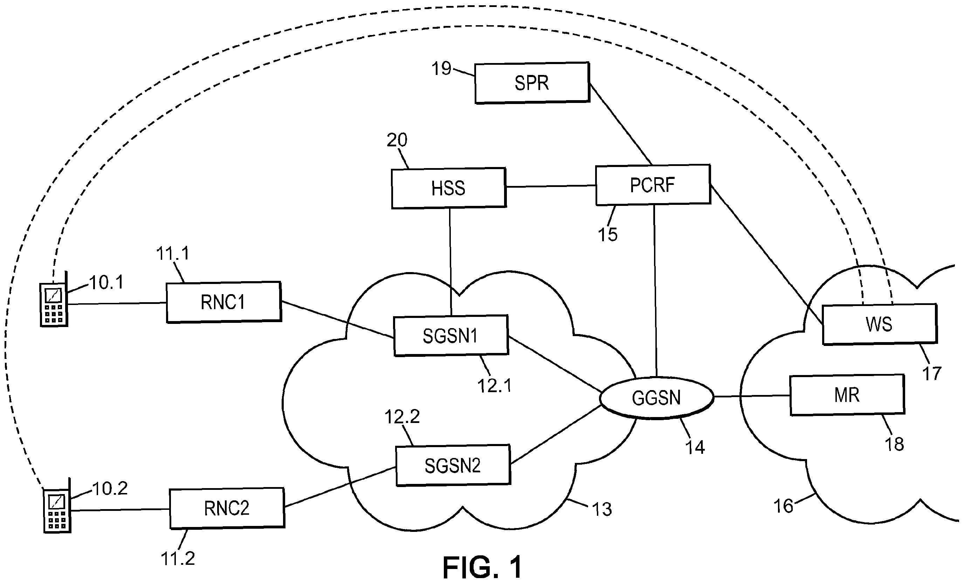

La **figure 1** illustre un système d'autorisation d'un flux pair à pair entre des premier et second terminaux utilisateurs 10.1 et 10.2 selon un mode de réalisation de l'invention.

Les terminaux utilisateurs 10.1 et 10.2 sont des terminaux mobiles ayant un accès à un réseau de télécommunications mobile 13 d'un opérateur de réseau. Les terminaux utilisateurs 10.1 et 10.2 peuvent à cet effet être des téléphones mobiles de type Smartphone par exemple.

L'accès au réseau 13 peut être permis par des RNC respectifs 11.1 et 11.2 (pour *« Radio Network Controller* » en anglais), qui contrôlent les transmissions de stations de base assurant les échanges radio avec les terminaux utilisateurs 10.1 et 10.2. Les RNC 11.1 et 11.2 peuvent être interfacés avec des passerelles SGSN respectives 12.1 et 12.2 (pour « *Serving GPRS Support Node* » en anglais) qui permettent l'acheminement des données vers le réseau mobile 13. Les passerelles SGSN 12.1 et 12.2 peuvent gérer l'interface avec un réseau de paquet externe 16 via une autre passerelle réseau 14, de type GGSN (pout « *Gateway GPRS Support Node* » en anglais) ou P-GW par exemple.

La passerelle GGSN 14 peut notamment former une interface avec un serveur relais média 18, par lequel les flux de données pair à pair entre terminaux mobiles sont forcés de transiter selon les solutions de l'art antérieur. Le serveur relais média 18 peut appartenir au domaine d'un fournisseur de service 16 également en charge d'un serveur Web 17, comme illustré sur la figure 1 et dans la suite de la description. Alternativement, ce serveur 18 peut être situé en dehors du domaine du fournisseur de service 16 (par exemple dans le réseau de télécommunications 13) auquel cas il est alors indiqué par ce fournisseur de service 16 à l'opérateur du réseau 13.

Le serveur relais média 18 a pour fonction de permettre à des terminaux utilisateurs, notamment avec des modules clients WebRTC, d'établir des communications réseau malgré la présence de firewall ou de routeurs NAT entre ces terminaux qui empêchent des communications P2P directes entre ces terminaux. Un tel serveur relais média 18 peut être un serveur relais média TURN tel que défini dans le document RFC 5766 « Traversal Using Relays around NAT (TURN): Relay Extensions to Session Traversal Utilities for NAT (STUN) »*.*

Le serveur Web 17 du fournisseur de services peut héberger une application de type WebRTC par exemple. Ce serveur Web 17 peut échanger, via une interface Rx (définie dans le standard « Technical Specification Group Core Network and Terminals ; Policy and Charging Control over Rx reference point », TS 29-214, version 11.8.0 du 15 mars 2013) par exemple, avec l'opérateur réseau et notamment avec une plateforme 15, de type PCRF par exemple (pour « *Policy and Charging Rules Function* » en anglais), apte à fournir des règles à une fonction PCEF (pour *« Policy and Charging Enforcement Function* » en anglais) hébergée par la passerelle GGSN 14. La plateforme PCRF 15 peut avoir accès à des données de souscription des utilisateurs afin notamment de pouvoir adapter l'usage des ressources de transport par le service ainsi que la taxation du service, en fonction d'un profil de l'utilisateur. Les données de souscription des utilisateurs peuvent être stockées dans une base de données SPR 19 (pour « *Subscription Profile Repository* » en anglais) par exemple.

La fonction PCEF est en charge d'appliquer la politique en acceptant ou refusant des flux de données, elle sollicite la plateforme PCRF 15 via une interface Gx Diameter par exemple, en vue d'obtenir les règles PCC (pour *« Policy and Charging Control »* en anglais). Ces règles permettent d'identifier, bloquer, associer des qualités de services QoS (pour « *Quality of Service »* en anglais) aux flux, appliquer la taxation.

La plateforme PCRF 15 de l'opérateur du réseau mobile 13 peut être en charge de contrôler l'adéquation entre des droits aux services des utilisateurs et les ressources qui leur sont allouées, et peut également être en charge de la relation via l'interface Rx avec les fournisseurs de service dont les services sont supportés par le réseau mobile 13. La plateforme PCRF 15 peut en outre transmettre des instructions à la fonction PCEF.

Les localisations des terminaux utilisateurs 10.1 et 10.2 sont remontées à un serveur HSS 20 par les SGSN 12.1 et 12.2, via une interface de type S6a par exemple, basée sur le protocole Diameter, ou via des agents Diameter.

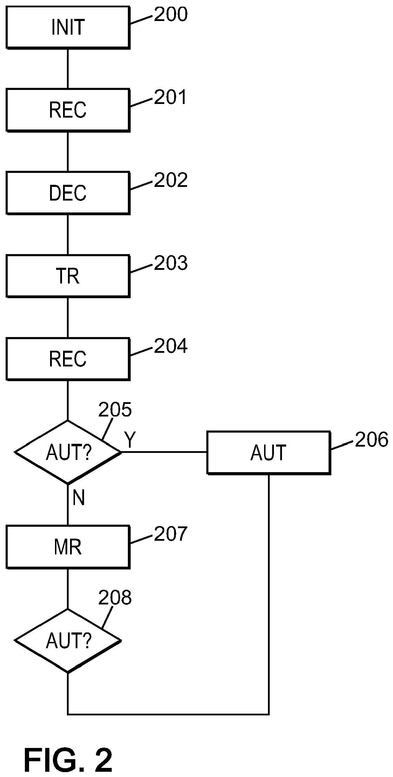

La **figure 2** est un diagramme illustrant les étapes d'un procédé d'autorisation d'établissement d'un flux pair à pair entre terminaux utilisateurs d'un réseau de télécommunications mobile, selon un mode de réalisation de l'invention.

A une étape 200 initiale, les premier et second terminaux utilisateurs 10.1 et 10.2 accèdent au serveur Web 17 du fournisseur de service en vue de requérir un service permettant l'échange d'un flux de données pair à pair entre les terminaux utilisateurs (service de type WebRTC par exemple).

Le serveur Web 17 identifie le flux requis, par exemple au moyen d'identifiants respectifs des premier et second terminaux utilisateurs 10.1 et 10.2. Le flux requis peut notamment être identifié par une adresse IP et un numéro de port du premier terminal utilisateur 10.1, par une adresse IP et un numéro de port du second terminal utilisateur, et par un identifiant du protocole mis en œuvre pour le service pair à pair. Le serveur Web 17 peut en outre déterminer les besoins du flux média pair à pair, par exemple en termes de bande passante, de données de connexion (adresses), de type de média (audio par exemple), de protocole de transport, de codecs.

A une étape 201, le serveur Web 17 envoie à la plateforme PCRF 15 une requête d'établissement d'un flux pair à pair entre les premier et second terminaux utilisateurs 10.1 et 10.2, la requête d'établissement comprenant un identifiant de flux comprenant au moins l'identifiant du premier terminal utilisateur 10.1 et l'identifiant du second terminal utilisateur 10.2. En particulier, l'identifiant de flux peut être un 4-tuple formé par l'adresse IP du terminal source du flux requis (par exemple 10.1), le numéro de port du terminal source du flux requis, l'adresse IP du terminal destinataire du flux requis (par exemple 10.2) et le numéro de port du terminal destinataire du flux requis, éventuellement complété par le protocole de transport (TCP ou UDP) à utiliser pour le flux requis afin de composer un identifiant de flux sous forme de 5-tuple.

La requête d'établissement peut en outre être complétée en indiquant les besoins du flux média identifiés ci-dessus. A noter que la requête d'établissement de flux peut requérir l'établissement d'un flux pair à pair pour une pluralité de couples de terminaux utilisateurs.

A une étape 202, après réception de la requête d'établissement de flux à l'étape 201, la plateforme PCRF 15 peut décider d'autoriser ou non l'établissement du flux pair à pair entre le premier terminal utilisateur 10.1 et le second terminal utilisateur 10.2. Aucune restriction n'est attachée aux critères ou règles pris en compte pour autoriser ou non le flux pair à pair.

Par exemple, la plateforme PCRF 15 peut autoriser les flux pair à pair pour certains fournisseurs de services, et les refuser pour d'autres. A cet effet, la plateforme PCRF 15 peut identifier le fournisseur de service à partir de la requête d'établissement reçue depuis le serveur Web 17.

L'identifiant du fournisseur de service 16 peut être l'adresse IP source de la requête d'établissement (e.g. celle du serveur WS 17), correspondant à l'adresse IP de la requête d'établissement de flux pair à pair. En variante, la requête d'établissement peut comprendre un champ spécifique servant à identifier le fournisseur de service 16, au moyen par exemple de l'insertion d'un couple nom d'utilisateur/mot de passe correspondant à ce fournisseur de service dans ce champ spécifique. Dans un autre mode de réalisation, un attribut identifiant le fournisseur de service peut être contenu dans cette requête d'établissement, cet attribut pouvant être une URI (pour « *Uniform Resource Identifier* » en anglais) comprenant par exemple une adresse du serveur web 17 du fournisseur de service 16 ou bien un identifiant générique du fournisseur de service 16.

En variante ou de manière complémentaire, la plateforme PCRF 15 peut en outre prendre en compte le type de média requis pour le flux pair à pair ou une valeur de bande passante minimale requise dans la requête d'établissement du flux. Par exemple, l'établissement du flux pair à pair peut être autorisé si des ressources en bande passante sur le réseau mobile 13 sont suffisantes pour permettre d'allouer la bande passante minimale requise ou pour permettre le transport du type de média requis. La prise en compte des facteurs précités permet d'éviter de surcharger le réseau mobile 13 tout en assurant une qualité de service satisfaisante pour les utilisateurs des services mettant en œuvre des flux pair à pair.

En fonction de la décision prise à l'étape 202, la plateforme PCRF 15 transmet (étape 203) à la passerelle GGSN 14 un message d'autorisation ou de refus d'établissement d'un flux pair à pair entre les premier et second terminaux utilisateurs 10.1 et 10.2, ce message comprenant l'identifiant du flux discuté précédemment, par lequel sont identifiés les terminaux impliqués dans ce flux (par exemple, par leurs adresses IP et numéros de port respectifs). Ainsi, un identifiant de flux sous forme de 5-tuple (adresse IP du terminal source du flux requis, numéro de port du terminal source du flux requis, adresse IP du terminal destinataire du flux requis, numéro de port du terminal destinataire du flux requis, protocole de transport) peut être inséré dans un tel message d'autorisation ou de refus d'établissement à destination de la passerelle GGSN 14.

Dans le cas où un message d'acceptation est transmis, le message peut en outre comprendre une valeur de qualité de service à mettre en œuvre pour le flux identifié et/ou une valeur de bande passante minimale à garantir pour le flux identifié, ces valeurs étant déduites de la requête d'établissement de flux pair à pair.

A une étape 204, la passerelle GGSN 14 reçoit le message d'autorisation ou de refus transmis à l'étape 202 et extrait l'identifiant de flux susmentionné, en l'occurrence le 5-tuple (adresse IP du terminal source du flux requis, numéro de port du terminal source du flux requis, adresse IP du terminal destinataire du flux requis, numéro de port du terminal destinataire du flux requis, protocole de transport), qu'il peut stocker en association avec une information correspondant au type de message (autorisation ou refus) reçu.

A une étape 205, lorsque la passerelle GGSN 14 reçoit un paquet IP d'un flux entre deux terminaux utilisateurs, la passerelle GGSN 14 détermine si un message d'autorisation a été reçu préalablement pour ces deux terminaux utilisateurs. Elle peut notamment faire cette vérification en comparant les adresses IP et numéros de port source et destinataire du paquet IP reçus avec les identifiants de flux pour lesquels un flux pair à pair a été autorisé, ou refusé, par la plateforme PCRF 15. Si jamais ces adresses IP et numéros de port correspondent aux éléments d'un 5-tuple stocké, la passerelle GGSN 14 utilise l'information associée à ce 5-tuple pour décider si le flux est autorisé ou refusé.

Si un message d'autorisation d'établissement de flux pair à pair a été reçu à l'étape 203 pour les terminaux utilisateurs 10.1 et 10.2, la passerelle GGSN 14 peut autoriser, à une étape 206, un flux de données à transiter en pair à pair entre le premier terminal utilisateur 10.1 et le second terminal utilisateur 10.2 via le réseau de télécommunications mobile 13. Les terminaux utilisateurs 10.1 et 10.2 peuvent alors communiquer directement en pair à pair, via la passerelle GGSN, sans passer par le domaine du fournisseur de service 16.

Dans ce cas, une requête d'autorisation peut avantageusement être transmise par la passerelle GGSN au réseau d'accès, via les passerelles SGSN1 et SGSN2, cette requête comprenant au moins l'identifiant du flux autorisé, et éventuellement les données correspondant à la politique de transport à mettre en œuvre pour ce flux. La transmission de la requête d'autorisation vers le réseau d'accès permet notamment d'autoriser le flux pair à pair dans une situation particulière où celui-ci pourrait être bloqué par des passerelles SGSN ou des sondes d'inspection de paquet (DPI) appliquant une politique de blocage de ce type de flux.

En revanche, si un message de refus d'établissement de flux pair à pair a été reçu à l'étape 203 pour les terminaux utilisateurs 10.1 et 10.2, ou si aucun message n'a été reçu de la plateforme PCRF 15 pour ces terminaux utilisateurs, la passerelle GGSN 14 peut forcer, à une étape 207, un flux de données entre le premier terminal utilisateur et le second terminal utilisateur à transiter par le serveur relais média 18. Le flux de données entre les terminaux utilisateurs 10.1 et 10.2 est alors redirigé vers le serveur relais média 18, dont l'adresse a été envoyée par le serveur web 17 aux terminaux utilisateurs. Le flux de données est alors un flux classique routé depuis la passerelle GGSN vers le serveur relais média 18.

Dans ce dernier cas, une requête de refus peut être avantageusement transmise au réseau d'accès, via les passerelles SGSN1 et SGSN2, cette requête comprenant au moins l'identifiant du flux refusé. La transmission de cette requête de refus vers le réseau d'accès permet notamment d'empêcher le contournement du serveur relais média 18 par un élément du réseau d'accès qui autoriserait les flux direct pair à pair entre les deux terminaux sans passer par la passerelle GGSN.

Si un message d'autorisation pour les terminaux utilisateurs 10.1 et 10.2 est ensuite reçu à une étape 208, la passerelle GGSN 14, qui a précédemment forcé le flux de données à transiter par le serveur relais média 18, peut autoriser un basculement dynamique sur un flux de données pair à pair directement entre le premier terminal utilisateur 10.1 et le second terminal utilisateur 10.2 via le réseau de télécommunications mobile 13. Ici aussi, une requête d'autorisation peut être avantageusement transmise par la passerelle GGSN 14 au réseau d'accès, cette requête comprenant au moins l'identifiant du flux autorisé, et éventuellement les données correspondant à la politique de transport à mettre en œuvre pour ce flux, pour les raisons invoquées précédemment.

Lorsque le flux pair à pair est autorisé entre les terminaux utilisateurs 10.1 et 10.2, le procédé peut comprendre une étape complémentaire (non représentée) durant laquelle le serveur Web 17, ou toute autre entité du fournisseur de service, peut envoyer un rapport par tranche de volume (par exemple tous les 100 Mégaoctets), qui indique le volume total des données envoyées et reçues par des navigateurs (navigateurs internet et applications mobiles par exemple) des terminaux utilisateurs mobiles utilisant les services du fournisseur de services supportés en pair à pair. Le rapport est envoyé à l'opérateur du réseau de télécommunications mobile 13 qui supporte le trafic pair à pair.

Le fournisseur de service peut disposer de ces informations grâce à des statistiques collectées via un mécanisme de type Getstat par exemple.

Sur la base de ces informations, l'opérateur du réseau de télécommunications mobile peut décrémenter le volume de bande passante, de temps, utilisé par chaque flux pair à pair lors de la communication, et peut interrompre les flux de données d'utilisateur ayant épuisé leur compte. Par exemple, en cas de compte prépayé, correspondant à un volume de données déterminé, l'opérateur du réseau 13 peut arrêter l'activation du mécanisme pair à pair lorsque le volume de données échangées en pair à pair a atteint le volume de données déterminé.

L'opérateur du réseau 13 peut en outre vérifier la véracité des rapports reçus des fournisseurs de service, en scrutant un échantillon d'appel WebRTC (dans l'exemple où les fournisseurs de services fournissent un service de type WebRTC) supporté en pair à pair, et en se basant sur des appels unitaires que l'opérateur du réseau 13 déclenche à partir de terminaux de test. Il est ainsi rendu possible pour l'opérateur du réseau 13 de vérifier que les rapports fournis par les fournisseurs de service correspondent à ce qui est mesuré sur ces terminaux de tests.

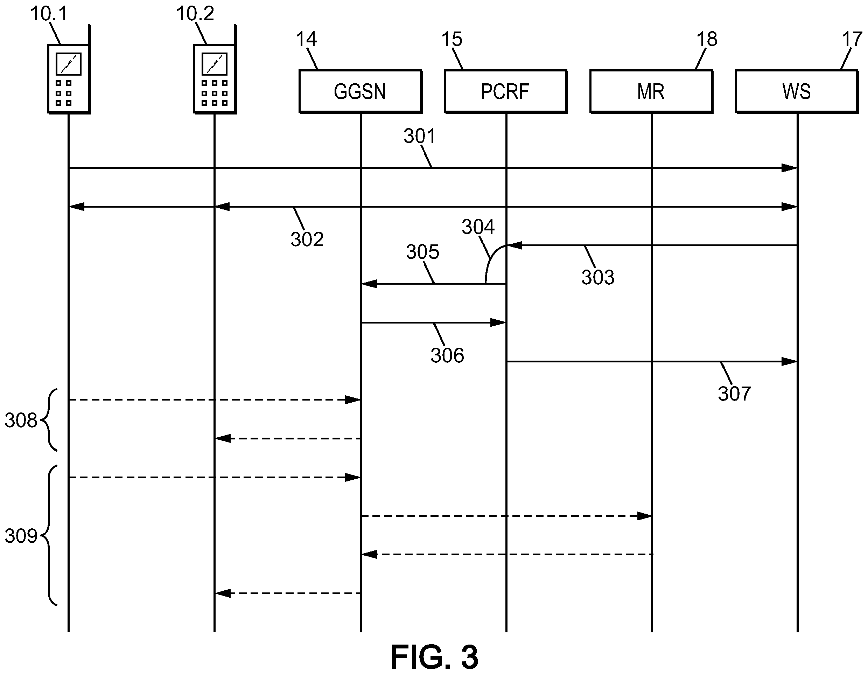

La **figure 3** représente un diagramme d'échanges entre les entités du système représenté sur la figure 1.

A une étape 301, le premier terminal utilisateur se connecte au serveur Web 17 et requiert l'établissement d'un flux pair à pair avec le second terminal utilisateur 10.2. Le serveur Web 17 du fournisseur de service 16 obtient alors à une étape 302 les identifiants des terminaux utilisateurs 10.1 et 10.2.

A une étape 303, le serveur Web 17 transmet à la plateforme PCRF 15 une requête d'établissement d'un flux pair à pair entre le premier terminal utilisateur 10.1 et le second terminal utilisateur 10.2, la requête d'établissement identifiant le fournisseur de service 16 (par exemple avec un identifiant générique de ce fournisseur ou un couple nom d'utilisateur/mot de passe), ainsi que le flux requis (par exemple au moyen d'un 5-tuple (adresse IP du terminal source du flux requis, numéro de port du terminal source du flux requis, adresse IP du terminal destinataire du flux requis, numéro de port du terminal destinataire du flux requis, protocole de transport)), et éventuellement les conditions souhaitées pour le transport du flux (en termes de débits, de paramètres de QoS, etc).

Sur réception de la requête d'établissement de flux pair à pair, la plateforme PCRF 15 décide (étape 304) d'autoriser ou non l'établissement d'un flux pair à pair entre le premier terminal utilisateur 10.1 et le second terminal utilisateur 10.2, par exemple en fonction du fournisseur de service identifié. Les critères et règles utilisées pour autoriser ou non le flux pair à pair ont été décrits ci-avant.

A une étape 305, la plateforme PCRF 15 transmet un message d'autorisation ou de refus du flux pair à pair entre les premier et second terminaux utilisateurs 10.1 et 10.2, à la passerelle GGSN 14, comme décrit précédemment.

A une étape 306 optionnelle, la passerelle GGSN 14 peut renvoyer une confirmation de réception du message d'autorisation ou de refus reçu à l'étape 305.

A une étape 307 optionnelle, la plateforme PCRF 15 peut informer le serveur Web 17 de la décision prise à l'étape 304. A cet effet, un message d'acceptation ou de refus du flux pair à pair peut être transmis au serveur Web 17.

A une étape 308, conditionnée par l'acceptation du flux pair à pair par la passerelle PCRF 15, un flux de données média est autorisé à transiter directement entre les premier et second terminaux utilisateurs 10.1 et 10.2 via le réseau de télécommunications mobile 13, en transitant par la passerelle GGSN 14 sans passer par le fournisseur de service 16.

A contrario, lors d'une étape 309, conditionnée par le refus du flux pair à pair par la passerelle PCRF 15, un flux de données média entre les premier et second terminaux utilisateurs 10.1 et 10.2 est forcé par la passerelle GGSN 14 à transiter par le serveur relais média 18.

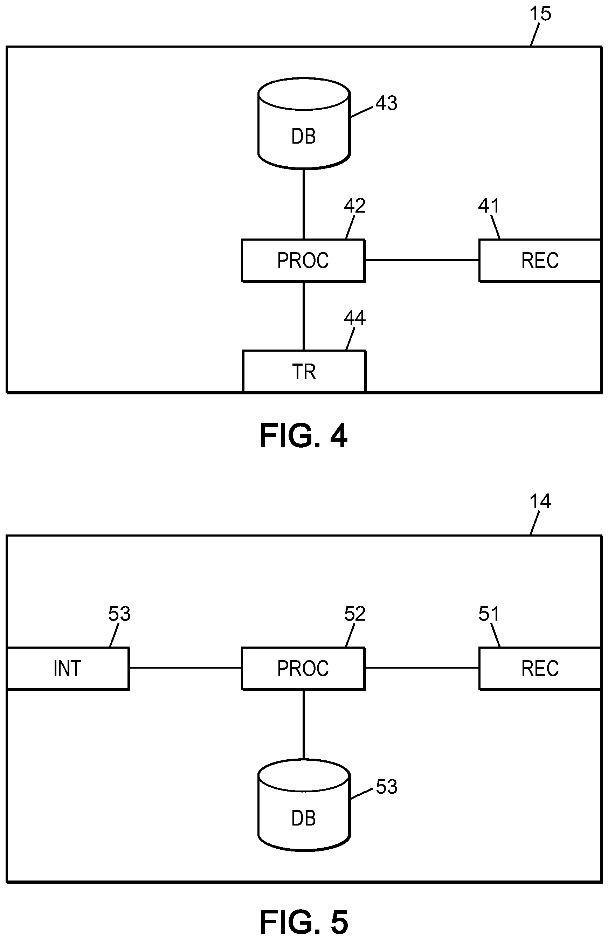

La **figure 4** illustre une plateforme d'un réseau de télécommunications, telle que la plateforme PCRF 15 de la figure 1.

La plateforme PCRF 15 comprend une première interface 41 pour communiquer avec des serveurs de fournisseurs de service, et notamment pour la réception de requêtes d'acceptation d'un flux pair à pair entre terminaux utilisateurs. La première interface 41 peut être l'interface Rx définie dans le standard TS 29-214 précité.

La plateforme PCRF 15 comprend en outre une unité de traitement 42 (implémentée par exemple sous forme de processeur) apte à décider d'autoriser ou de refuser l'établissement de flux pair à pair requis par les fournisseurs de service, ainsi qu'une base de données 43 pouvant stocker les identifiants des fournisseurs de service pour lesquels les flux pair à pair peuvent être autorisés par exemple.

Une deuxième interface 44 est apte à communiquer avec la passerelle GGSN 14 et notamment à transmettre un message d'autorisation ou de refus d'établissement d'un flux pair à pair. La deuxième interface peut par exemple être une interface Gx, également définie dans le standard précité.

La **figure 5** illustre une passerelle réseau en charge de contrôler les flux transitant sur le réseau de télécommunications mobiles, telle que la passerelle GGSN 14 de la figure 1.

La passerelle réseau 14 comprend une première interface 51 apte à communiquer avec la plateforme PCRF 15, notamment pour la réception de messages de refus ou d'autorisation de flux pair à pair. La première interface 51 peut être une interface Gx.

La passerelle réseau 14 comprend en outre une unité de traitement 52 (implémentée par exemple sous forme de processeur) apte à déterminer si un flux pair à pair doit être autorisé ou non, et le cas échéant, à déterminer la politique de transport à appliquer dans le réseau d'accès 13, sur la base des messages reçus depuis la plateforme PCRF 15. Une base de données 54 peut permettre de maintenir à jour des identifiants de flux en correspondance avec une décision d'autorisation ou de refus, et le cas échéant, avec une politique de transport de flux pair à pair (bande passante minimale à allouer, QoS à assurer).

La passerelle GGSN 14 comprend une seconde interface 53 apte à communiquer avec le réseau d'accès, notamment en vue d'autoriser ou de refuser l'établissement de flux pair à pair entre utilisateurs, en fonction des messages d'autorisation ou de refus reçus.

Ainsi, la présente invention permet l'activation de flux pair à pair et autorisés par le fournisseur de service sur un réseau mobile d'un opérateur de télécommunications. De ce fait, la latence des flux pair à pair, qui n'ont pas nécessairement à transiter par un serveur tiers, est améliorée. La décision d'autoriser ou non le flux pair à pair dépendant de l'opérateur réseau, il demeure possible de forcer les flux média à transiter par un serveur relais média, et l'opérateur réseau garde ainsi la possibilité d'inspecter et de contrôler les flux qui transitent sur le réseau mobile.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention. Ainsi, un contrôle des flux par une passerelle réseau 14 correspondant à une passerelle de type GGSN a été décrit, sans que l'invention ne se limite à ce seul exemple. Ainsi, toute passerelle réseau d'un réseau de communication par laquelle transite des flux de données entre terminaux utilisateurs, et disposant par ailleurs d'une interface avec un serveur relais média désigné par un fournisseur de service tel que discuté précédemment, est susceptible de mettre en œuvre le contrôle de flux transitant dans le réseau présenté ci-avant.

## Revendications

1. Procédé d'autorisation d'établissement d'un flux pair à pair entre deux terminaux utilisateurs au travers d'un réseau de télécommunications mobiles (13), ledit procédé comprenant les étapes suivantes, mises en œuvre dans une plateforme (15) du réseau de télécommunications mobiles:
- recevoir, depuis un serveur (17) d'un fournisseur de service pair à pair , une requête d'établissement d'un flux pair à pair entre un premier terminal utilisateur (10.1) et un second terminal utilisateur (10.2), la requête d'établissement comprenant un identifiant de flux, l'identifiant de flux comprenant au moins un identifiant du premier terminal utilisateur et un identifiant du second terminal utilisateur ;
- décider d'autoriser ou non l'établissement du flux pair à pair entre le premier terminal utilisateur et le second terminal utilisateur ;
- transmettre un message d'autorisation ou de refus du flux à une passerelle réseau (14) en charge de contrôler les flux transitant sur le réseau de télécommunications mobiles, le message d'autorisation ou de refus comprenant l'identifiant de flux, le procédé comprenant en outre les étapes suivantes, mises en œuvre dans la passerelle réseau (14) en charge de contrôler les flux transitant sur le réseau de télécommunications mobiles (13) lorsqu'un paquet d'un flux entre le premier terminal utilisateur (10.1) et le deuxième terminal utilisateur (10.2) est reçu :
- si un message d'autorisation comprenant l'identifiant dudit flux a été reçu par la passerelle réseau (14), autoriser ledit flux de données à transiter en pair à pair entre le premier terminal utilisateur (10.1) et le second terminal utilisateur (10.2) via le réseau de télécommunications mobiles ;
- si un message de refus comprenant l'identifiant dudit flux a été reçu par la passerelle réseau (14) ou en l'absence de réception par la passerelle réseau (14) d'un message d'autorisation de flux comprenant l'identifiant dudit flux, forcer le flux de données entre le premier terminal utilisateur et le second terminal utilisateur à transiter par un serveur relais média (18).

2. Procédé selon la revendication 1, dans lequel l'étape de décision d'autoriser ou non l'établissement du flux comprend les étapes suivantes :
- identifier le fournisseur de service pair à pair ayant émis la requête ;
- décider d'autoriser ou non l'établissement du flux pair à pair entre le premier terminal utilisateur (10.1) et le second terminal utilisateur (10.2) en fonction du fournisseur de service identifié.

3. Procédé selon la revendication 2, dans lequel le fournisseur de service est identifié au moyen d'au moins un élément, contenu dans la requête d'établissement de flux pair à pair, parmi une adresse IP source de la requête d'établissement, un attribut désignant le fournisseur de service ou un champ de la requête d'établissement identifiant le fournisseur de service.

4. Procédé selon l'une des revendications précédentes, dans lequel la requête d'établissement de flux identifie en outre un type de média pour la communication pair à pair, et dans lequel la décision d'autoriser ou non l'établissement du flux pair à pair dépend du type de média identifié.

5. Procédé selon l'une des revendications précédentes, dans lequel la requête d'établissement de flux identifie en outre une valeur de bande passante minimale requise pour l'établissement du flux pair à pair et dans lequel la décision d'autoriser ou non l'établissement du flux pair à pair dépend de la valeur de bande passante minimale requise.

6. Procédé selon la revendication 4 ou 5, dans lequel la décision d'autoriser ou non l'établissement du flux pair à pair dépend en outre d'une valeur de bande passante disponible sur le réseau de télécommunications mobiles (13).

7. Procédé selon l'une des revendications précédentes, dans lequel l'identifiant de flux comprend une première adresse IP et un premier numéro de port du premier terminal utilisateur (10.1), une seconde adresse IP et un second numéro de port du second terminal utilisateur (10.2), et un identifiant de protocole de communication pair à pair.

8. Procédé selon l'une des revendications précédentes, dans lequel le message d'autorisation ou de refus du flux comprend en outre l'un ou les paramètres suivants :
- une valeur de qualité de service à mettre en œuvre pour le flux identifié ;
- une valeur de bande passante minimale à garantir pour le flux identifié.

9. Procédé selon la revendication 1, comprenant en outre l'étape suivante mise en œuvre dans la passerelle réseau (14) en charge de contrôler les flux transitant sur le réseau de télécommunications mobiles (13) :
- sur réception d'un message d'autorisation de flux après avoir forcé le flux de données à transiter par le serveur relais média (18), autoriser le flux de données à transiter en pair à pair entre le premier terminal utilisateur (10.1) et le second terminal utilisateur (10.2) via le réseau de télécommunications mobiles.

10. Procédé selon l'une des revendications précédentes, comprenant en outre l'étape suivante mise en œuvre dans la plateforme (15) :
- recevoir, depuis le fournisseur de service pair à pair, des rapports de consommation relatifs à des flux pairs à pairs autorisés sur le réseau de télécommunications mobiles (13).

11. Produit programme informatique comportant des instructions pour la mise en œuvre du procédé selon l'une des revendications 1 à 10, lorsque ce programme est exécuté par un processeur.

12. Système d'autorisation d'établissement d'un flux pair à pair entre deux terminaux utilisateurs au travers d'un réseau de télécommunications mobiles (13), ledit système comprenant une plateforme de réseau de télécommunications mobiles (15) et une passerelle réseau (14) en charge de contrôler les flux transitant sur le réseau de télécommunications mobile, Ladite plateforme de réseau comprenant :
- une unité de réception (41) apte à recevoir, depuis un serveur (17) d'un fournisseur de service pair à pair, une requête d'établissement d'un flux pair à pair entre un premier terminal utilisateur (10.1) et un second terminal utilisateur (10.2), la requête d'établissement comprenant un identifiant de flux, l'identifiant de flux comprenant au moins un identifiant du premier terminal utilisateur et un identifiant du second terminal utilisateur ;
- une unité de décision (42) apte à décider d'autoriser ou non l'établissement du flux pair à pair entre le premier terminal et le second terminal utilisateur ;
- une unité de transmission (43) apte à transmettre un message d'autorisation ou de refus du flux à une passerelle réseau (14) en charge de contrôler les flux transitant sur le réseau de télécommunications mobiles, le message d'autorisation ou de refus comprenant l'identifiant de flux ;
Et ladite passerelle réseau comprenant :
- une unité de réception (51) apte à recevoir un message d'autorisation ou de refus du flux, le message d'autorisation ou de refus comprenant l'identifiant de flux ;
- une unité de traitement (52) apte à, lorsqu'un paquet d'un flux entre le premier terminal utilisateur (10.1) et le deuxième terminal utilisateur (10.2) est reçu par l'unité de réception (51) :
- autoriser ledit flux de données à transiter en pair à pair entre le premier terminal utilisateur (10.1) et le second terminal utilisateur (10.2) via le réseau de télécommunications mobiles, si un message d'autorisation comprenant l'identifiant dudit flux a été reçu par l'unité de réception (51) ;
- forcer le flux de données entre le premier terminal utilisateur et le second terminal utilisateur à transiter par un serveur relais média (18), si un message de refus comprenant l'identifiant dudit flux a été reçu par l'unité de réception (51) ou en l'absence de réception par l'unité de réception (51) d'un message d'autorisation de flux comprenant l'identifiant dudit flux.

## Patentansprüche

1. Verfahren zur Autorisierung der Einrichtung eines Peer-to-Peer-Streams zwischen zwei Benutzerendgeräten durch ein Mobiltelekommunikationsnetz (13), wobei das Verfahren die folgenden Schritte umfasst, die in einer Plattform (15) des Mobiltelekommunikationsnetzes ausgeführt werden:
- Empfangen, von einem Server (17) eines Peer-to-Peer-Dienstanbieters, einer Anforderung zur Einrichtung eines Peer-to-Peer-Streams zwischen einem ersten Benutzerendgerät (10.1) und einem zweiten Benutzerendgerät (10.2), wobei die Einrichtungsanforderung eine Stream-Kennung umfasst, wobei die Stream-Kennung wenigstens eine Kennung des ersten Benutzerendgerätes und eine Kennung des zweiten Benutzerendgerätes umfasst;
- Entscheiden, die Einrichtung des Peer-to-Peer-Streams zwischen dem ersten Benutzerendgerät und dem zweiten Benutzerendgerät zu autorisieren oder nicht;
- Senden einer Nachricht über eine Autorisierung oder Ablehnung des Streams an ein Netz-Gateway (14), das die Aufgabe hat, die Streams zu steuern, die über das Mobiltelekommunikationsnetz laufen, wobei die Nachricht über eine Autorisierung oder Ablehnung die Stream-Kennung umfasst,
wobei das Verfahren außerdem die folgenden Schritte umfasst, die in dem Netz-Gateway (14) ausgeführt werden, das die Aufgabe hat, die Streams zu steuern, die über das Mobiltelekommunikationsnetz (13) laufen, wenn ein Paket eines Streams zwischen dem ersten Benutzerendgerät (10.1) und dem zweiten Benutzerendgerät (10.2) empfangen wird:
- falls eine Nachricht über eine Autorisierung, welche die Kennung des Streams umfasst, durch das Netz-Gateway (14) empfangen worden ist, Autorisieren, dass der Datenstream als Peer-to-Peer-Stream zwischen dem ersten Benutzerendgerät (10.1) und dem zweiten Benutzerendgerät (10.2) über das Mobiltelekommunikationsnetz läuft;
- falls eine Nachricht über eine Ablehnung, welche die Kennung des Streams umfasst, durch das Netz-Gateway (14) empfangen worden ist, oder falls kein Empfang einer Nachricht über eine Autorisierung eines Streams, welche die Kennung des Streams umfasst, durch das Netz-Gateway (14) erfolgt, Bewirken, dass der Datenstream zwischen dem ersten Benutzerendgerät und dem zweiten Benutzerendgerät über einen Media-Relay-Server (18) läuft.

2. Verfahren nach Anspruch 1, wobei der Schritt der Entscheidung, die Einrichtung des Streams zu autorisieren oder nicht, die folgenden Schritte umfasst:
- Identifizieren des Peer-to-Peer-Dienstanbieters, der die Anforderung gesendet hat;
- Entscheiden, in Abhängigkeit von dem identifizierten Dienstanbieter, die Einrichtung des Peer-to-Peer-Streams zwischen dem ersten Benutzerendgerät (10.1) und dem zweiten Benutzerendgerät (10.2) zu autorisieren oder nicht.

3. Verfahren nach Anspruch 2, wobei der Dienstanbieter mittels wenigstens eines in der Anforderung zur Einrichtung eines Peer-to-Peer-Streams enthaltenen Elements identifiziert wird, welches eine IP-Quelladresse der Einrichtungsanforderung, ein Attribut, das den Dienstanbieter bezeichnet, oder ein Feld der Einrichtungsanforderung, das den Dienstanbieter identifiziert, ist.

4. Verfahren nach einem der vorhergehenden Ansprüche, wobei die Anforderung zur Einrichtung eines Streams außerdem einen Medientyp für die Peer-to-Peer-Kommunikation identifiziert, und wobei die Entscheidung, die Einrichtung des Peer-to-Peer-Streams zu autorisieren oder nicht, vom identifizierten Medientyp abhängt.

5. Verfahren nach einem der vorhergehenden Ansprüche, wobei die Anforderung zur Einrichtung eines Streams außerdem einen minimalen Durchlassbereichswert identifiziert, der für die Einrichtung des Peer-to-Peer-Streams erforderlich ist, und wobei die Entscheidung, die Einrichtung des Peer-to-Peer-Streams zu autorisieren oder nicht, von dem erforderlichen minimalen Durchlassbereichswert abhängt.

6. Verfahren nach Anspruch 4 oder 5, wobei die Entscheidung, die Einrichtung des Peer-to-Peer-Streams zu autorisieren oder nicht, außerdem von einem Durchlassbereichswert abhängt, der in dem Mobiltelekommunikationsnetz (13) verfügbar ist.

7. Verfahren nach einem der vorhergehenden Ansprüche, wobei die Stream-Kennung eine erste IP-Adresse und eine erste Portnummer des ersten Benutzerendgerätes (10.1), eine zweite IP-Adresse und eine zweite Portnummer des zweiten Benutzerendgerätes (10.2) und eine Kennung des Peer-to-Peer-Kommunikationsprotokolls umfasst.

8. Verfahren nach einem der vorhergehenden Ansprüche, wobei die Nachricht über die Autorisierung oder Ablehnung des Streams außerdem einen der folgenden Parameter oder beide umfasst:
- einen Wert der Dienstgüte, der für den identifizierten Stream zu erreichen ist;
- einen minimalen Durchlassbereichswert, der für den identifizierten Stream zu garantieren ist.

9. Verfahren nach Anspruch 1, welches außerdem den folgenden Schritt umfasst, der in dem Netz-Gateway (14) ausgeführt wird, das die Aufgabe hat, die Streams zu steuern, die über das Mobiltelekommunikationsnetz (13) laufen:
- bei Empfang einer Nachricht über die Autorisierung eines Streams, nachdem bewirkt worden ist, dass der Datenstream über den Media-Relay-Server (18) läuft, Autorisieren, dass der Datenstream als Peer-to-Peer-Stream zwischen dem ersten Benutzerendgerät (10.1) und dem zweiten Benutzerendgerät (10.2) über das Mobiltelekommunikationsnetz läuft.

10. Verfahren nach einem der vorhergehenden Ansprüche, welches außerdem den folgenden Schritt umfasst, der in der Plattform (15) ausgeführt wird:
- Empfangen, von dem Peer-to-Peer-Dienstanbieter, von Verbrauchsberichten, die sich auf autorisierte Peer-to-Peer-Streams im Mobiltelekommunikationsnetz (13) beziehen.

11. Computerprogrammprodukt, welches Anweisungen für die Durchführung des Verfahrens nach einem der Ansprüche 1 bis 10, wenn dieses Programm von einem Prozessor ausgeführt wird, umfasst.

12. System zur Autorisierung der Einrichtung eines Peer-to-Peer-Streams zwischen zwei Benutzerendgeräten durch ein Mobiltelekommunikationsnetz (13), wobei das System eine Plattform (15) des Mobiltelekommunikationsnetzes und ein Netz-Gateway (14), das die Aufgabe hat, die Streams zu steuern, die über das Mobiltelekommunikationsnetz laufen, umfasst, wobei die Netzplattform umfasst:
- eine Empfangseinheit (41), die dafür ausgelegt ist, von einem Server (17) eines Peer-to-Peer-Dienstanbieters eine Anforderung zur Einrichtung eines Peer-to-Peer-Streams zwischen einem ersten Benutzerendgerät (10.1) und einem zweiten Benutzerendgerät (10.2) zu empfangen, wobei die Einrichtungsanforderung eine Stream-Kennung umfasst, wobei die Stream-Kennung wenigstens eine Kennung des ersten Benutzerendgerätes und eine Kennung des zweiten Benutzerendgerätes umfasst;
- eine Entscheidungseinheit (42), die dafür ausgelegt ist zu entscheiden, die Einrichtung des Peer-to-Peer-Streams zwischen dem ersten Benutzerendgerät und dem zweiten Benutzerendgerät zu autorisieren oder nicht;
- eine Sendeeinheit (43), die dafür ausgelegt ist, eine Nachricht über eine Autorisierung oder Ablehnung des Streams an ein Netz-Gateway (14) zu senden, das die Aufgabe hat, die Streams zu steuern, die über das Mobiltelekommunikationsnetz laufen, wobei die Nachricht über eine Autorisierung oder Ablehnung die Stream-Kennung umfasst;
und wobei das Netz-Gateway umfasst:
- eine Empfangseinheit (51), die dafür ausgelegt ist, eine Nachricht über eine Autorisierung oder Ablehnung des Streams zu empfangen, wobei die Nachricht über eine Autorisierung oder Ablehnung die Stream-Kennung umfasst;
- eine Verarbeitungseinheit (52), die dafür ausgelegt ist, wenn ein Paket eines Streams zwischen dem ersten Benutzerendgerät (10.1) und dem zweiten Benutzerendgerät (10.2) durch die Empfangseinheit (51) empfangen wird:
- zu autorisieren, dass der Datenstream als Peer-to-Peer-Stream zwischen dem ersten Benutzerendgerät (10.1) und dem zweiten Benutzerendgerät (10.2) über das Mobiltelekommunikationsnetz läuft, falls eine Nachricht über eine Autorisierung, welche die Kennung des Streams umfasst, durch die Empfangseinheit (51) empfangen worden ist;
- zu bewirken, dass der Datenstream zwischen dem ersten Benutzerendgerät und dem zweiten Benutzerendgerät über einen Media-Relay-Server (18) läuft, falls eine Nachricht über eine Ablehnung, welche die Kennung des Streams umfasst, durch die Empfangseinheit (51) empfangen worden ist, oder falls kein Empfang einer Nachricht über eine Autorisierung eines Streams, welche die Kennung des Streams umfasst, durch die Empfangseinheit (51) erfolgt.

## Claims

1. Method for authorizing the establishment of a peer-to-peer flow between two user terminals through a mobile telecommunications network (13), said method comprising the following steps implemented in a platform (15) of the mobile telecommunications network:
- receiving, from a server (17) of a peer-to-peer service provider, a request to establish a peer-to-peer flow between a first user terminal (10.1) and a second user terminal (10.2), the establishment request comprising a flow identifier, the flow identifier comprising at least an identifier of the first user terminal and an identifier of the second user terminal;
- deciding whether or not to authorize the establishment of the peer-to-peer flow between the first user terminal and the second user terminal;
- transmitting a message authorizing or denying the flow to a network gateway (14) responsible for controlling the flows transiting on the mobile telecommunications network, the authorization or denial message comprising the flow identifier,
the method furthermore comprising the following steps, implemented in the network gateway (14) responsible for controlling the flows transiting on the mobile telecommunications network (13) when a packet of a flow between the first user terminal (10.1) and the second user terminal (10.2) is received:
- if an authorization message comprising the identifier of said flow has been received by the network gateway (14), authorizing said data flow to transit in peer-to-peer mode between the first user terminal (10.1) and the second user terminal (10.2) via the mobile telecommunications network;
- if a denial message comprising the identifier of said flow has been received by the network gateway (14) or in the absence of reception of a flow authorization message comprising the identifier of said flow by the network gateway (14), forcing the data flow between the first user terminal and the second user terminal to transit via a media relay server (18).

2. Method according to Claim 1, wherein the step of deciding whether or not to authorize the establishment of the flow comprises the following steps:
- identifying the peer-to-peer service provider that transmitted the request;
- deciding whether or not to authorize the establishment of the peer-to-peer flow between the first user terminal (10.1) and the second user terminal (10.2) on the basis of the identified service provider.

3. Method according to Claim 2, wherein the service provider is identified by way of at least one element contained in the peer-to-peer flow establishment request, from among a source IP address of the establishment request, an attribute denoting the service provider or a field of the establishment request identifying the service provider.

4. Method according to one of the preceding claims, wherein the flow establishment request furthermore identifies a media type for the peer-to-peer communication, and wherein the decision whether or not to authorize the establishment of the peer-to-peer flow depends on the identified media type.

5. Method according to one of the preceding claims, wherein the flow establishment request furthermore identifies a minimum bandwidth value required to establish the peer-to-peer flow, and wherein the decision whether or not to authorize the establishment of the peer-to-peer flow depends on the required minimum bandwidth value.

6. Method according to Claim 4 or 5, wherein the decision whether or not to authorize the establishment of the peer-to-peer flow furthermore depends on a bandwidth value available on the mobile telecommunications network (13).

7. Method according to one of the preceding claims, wherein the flow identifier comprises a first IP address and a first port number of the first user terminal (10.1), a second IP address and a second port number of the second user terminal (10.2), and a peer-to-peer communication protocol identifier.

8. Method according to one of the preceding claims, wherein the message authorizing or denying the flow furthermore comprises one or both of the following parameters:
- a quality of service value to be implemented for the identified flow,
- a minimum bandwidth value to be guaranteed for the identified flow.

9. Method according to Claim 1, furthermore comprising the following step implemented in the network gateway (14) responsible for controlling the flows transiting on the mobile telecommunications network (13):
- upon receiving a flow authorization message after having forced the data flow to transit via the media relay server (18), authorizing the data flow to transit in peer-to-peer mode between the first user terminal (10.1) and the second user terminal (10.2) via the mobile telecommunications network.

10. Method according to one of the preceding claims, furthermore comprising the following step implemented in the platform (15):
- receiving, from the peer-to-peer service provider, consumption reports relating to peer-to-peer flows authorized on the mobile telecommunications network (13) .

11. Computer program product comprising instructions for implementing the method according to one of Claims 1 to 10 when this program is executed by a processor.

12. System for authorizing the establishment of a peer-to-peer flow between two user terminals through a mobile telecommunications network (13), said system comprising a mobile telecommunications network platform (15) and a network gateway (14) responsible for controlling the flows transiting on the mobile telecommunications network, said network platform comprising:
- a reception unit (41) able to receive, from a server (17) of a peer-to-peer service provider, a request to establish a peer-to-peer flow between a first user terminal (10.1) and a second user terminal (10.2), the establishment request comprising a flow identifier, the flow identifier comprising at least an identifier of the first user terminal and an identifier of the second user terminal;
- a decision unit (42) able to decide whether or not to authorize the establishment of the peer-to-peer flow between the first terminal and the second user terminal;
- a transmission unit (43) able to transmit a message authorizing or denying the flow to a network gateway (14) responsible for controlling the flows transiting on the mobile telecommunications network, the authorization or denial message comprising the flow identifier;
and said network gateway comprising:
- a reception unit (51) able to receive a message authorizing or denying the flow, the authorization or denial message comprising the flow identifier;
- a processing unit (52) able, when a packet of a flow between the first user terminal (10.1) and the second user terminal (10.2) is received by the reception unit (51), to:
- authorize said data flow to transit in peer-to-peer mode between the first user terminal (10.1) and the second user terminal (10.2) via the mobile telecommunications network if an authorization message comprising the identifier of said flow has been received by the reception unit (51);
- force the data flow between the first user terminal and the second user terminal to transit via a media relay server (18) if a denial message comprising the identifier of said flow has been received by the reception unit (51) or in the absence of reception of a flow authorization message comprising the identifier of said flow by the reception unit (51).
